Europäisches Patentamt

European Patent Office

Office européen des brevets

(19)

(11) Veröffentlichungsnummer: **0 287 848**
**B1**

(12)

# EUROPÄISCHE PATENTSCHRIFT

(45) Veröffentlichungstag der Patentschrift:
23.05.90

(51) Int. Cl.⁵: **B23D 19/06**

(21) Anmeldenummer: **88104925.8**

(22) Anmeldetag: **26.03.88**

(54) **Längsteil-Streifenschere.**

(30) Priorität: **23.04.87 DE 3713546**

(43) Veröffentlichungstag der Anmeldung:
**26.10.88 Patentblatt 88/43**

(45) Bekanntmachung des Hinweises auf die Patenterteilung:
**23.05.90 Patentblatt 90/21**

(84) Benannte Vertragsstaaten:
**AT BE DE FR GB IT NL**

(56) Entgegenhaltungen:
**US-A- 3 863 537**

(73) Patentinhaber: **SMS SCHLOEMANN-SIEMAG AKTIENGESELLSCHAFT,**
**Eduard-Schloemann-Strasse 4, D-4000 Düsseldorf 1(DE)**

(72) Erfinder: **Fritz, Manfred, Narzissenstrasse 28,**
**D-4006 Erkrath(DE)**
Erfinder: **Scheel, Hans, Asternweg 21,**
**D-5620 Velbert 1(DE)**

(74) Vertreter: **Müller, Gerd et al, Patentanwälte**
**HEMMERICH-MÜLLER-GROSSE-POLLMEIER-MEY**
**Hammerstrasse 2, D-5900 Siegen 1(DE)**

## Beschreibung

Die Erfindung betrifft eine Längsteil-Streifenschere für Bleche und Bänder aus Metall, deren die Kreismesser tragenden Messerwellen zur Einstellung der Messerüberdeckungen anstellbar sind, wogegen die Messerspalte durch zwischen den Kreismessern eingesetzte Distanzhülsen einstellbar sind (z.B. US-A 3 863 597). Eine genaue Schneidkanteneinstellung ist für die Qualität der Längsteilschnitte von großer Bedeutung. Es wurde festgestellt, daß trotz richtiger Schneidkanteneinstellung je nach Seitenlage der geschnittenen Streifen und insbesondere bei dickeren Blechen oder Bändern aus hochfestem Stahl eine mehr oder weniger ausgeprägte Gratbildung auftritt, die auf eine Veränderung der Position der zusammenarbeitenden Kreismesser während des Schneidens hindeutet.

Aufgabe der Erfindung ist es, eine Längsteil-Streifenschere dahingehend weiterzuentwickeln, daß unabhängig von den Schneidkräften stets gratfreie Schneidkanten erzeugt werden.

Die Lösung dieser Aufgabe besteht gemäß der Erfindung in der Anwendung einer Biegesteuerung für die Messerwellen zur Konstanthaltung eingestellter Messeruberdeckungen und Messerspalte in der Erkenntnis, daß die Durchbiegung der Messerwellen unter den Schneidkräften die Ursache für die lastbedingte Positionsänderung der Schneidkanten ist. Die Biegesteuerung ist aus dem Walzwerkbau für Arbeits und Stützwalzen seit langem zum Walzen von Flachmaterial bekannt und dient dazu, dem Walzspalt eine bestimmte Kontur zu verleihen. Die erfindungsgemäße Anwendung einer Biegesteuerung für die Messerwellen einer LängsteilStreifenschere dient einem anderen Zweck, nämlich der Erhaltung der Relativlage zusammenarbeitender Kreismesser während des Schneidens.

Zur Ausübung von auf die Messerwellen einwirkenden Biegemomenten werden Krafteinrichtungen eingesetzt, die unmittelbar an den Zapfen der Messerwellen angreifen. Die Einbaustücke, in denen die Messerwellenzapfen gelagert sind, müssen dann kippbar angeordnet werden, um Kantenpressungen in den Lagern durch Biegemomente zu vermeiden.

Bei entsprechender Auslegung der Lager ist es jedoch auch möglich, daß die Krafteinrichtungen über Hebelarme an übereinanderliegenden Einbaustücken der Messerwellen angreifen, wobei die Messerwellenzapfen in den Einbaustücken zur Übertragung von Biegemomenten über eine definierte Lagerlänge fest eingespannt sind.

Als Krafteinrichtungen zur Aufbringung von Biegekräften sind hydraulische Biegezylinder zu bevorzugen. Wenn diese doppelt beaufschlagbar sind, obwohl sie zur Aufbringung positiver Biegemomente lediglich eine Spreizkraft auszuüben brauchten, können der oder die Biegezylinder auf der Antriebsseite der Schere dazu benutzt werden, beim Messerwechsel die Messerwellen auseinanderzuspreizen, nachdem die Einbaustücke auf der Bedienungsseite wie bekannt abgezogen sind. Hierdurch wird der Messerwechsel und die axiale Einstellung der Kreismesser auf gewünschte Streifenbreiten erleichtert.

Die Biegezylinder sind zweckmäßig über zylinderseitige und kolbenstangenseitige Gelenkbolzen an die Hebelarme übereinanderliegender Einbaustücke angeschlossen. Sie können jedoch auch zwischen den Hebelarmen übereinanderliegender Einbaustücke festgelegt und mit zwei entgegengesetzt ausund einfahrbaren Kolbenstangen versehen sein.

Eine Möglichkeit zur Anstellung der Messerwellen besteht darin, daß die Messerwellen durch zwei senkrechte Verstellspindeln mit gegenläufigen Gewinden anstellbar sind, deren Muttergewinde in übereinanderliegenden Einbaustücken in möglichst großer Entfernung von den zugeordneten Krafteinrichtungen angeordnet sind. Durch diese Muttergewinde verlaufen dann die ideellen Drehachsen, um die die Einbaustücke unter den Biegekräften Kippbewegungen ausführen müssen.

Bevorzugt wird im Rahmen der Erfindung eine Anstellung der Messerwellen in der Weise, daß die Messerwellen über in den Einbaustücken drehbare Exzenterbüchsen anstellbar sind, und daß übereinanderliegende Einbaustücke in der Weise zur Übertragung von positiven oder negativen Biegemomenten zug- oder druckfest miteinander verbunden sind, daß sie Kippbewegungen ausführen können. Für den Normalfall der Ausübung positiver Biegemomente auf die Messerwellen empfiehlt es sich hierzu, daß übereinanderliegende Einbaustücke durch zwei Paare von Zugankern zugfest miteinander verbunden sind, und daß im Bereich der in größter Entfernung von den zugeordneten Krafteinrichtungen angeordneten Zugankern zwischen den Einbaustücken mindestens ein die Kippbewegungen zulassendes Distanzstück vorgesehen ist, und daß die in kürzester Entfernung von den zugeordneten Krafteinrichtungen angeordneten Zuganker an einem Ende eine Druckfeder durchgreifen, die zwischen einem der Einbaustücke und der Spannmutter eines jeden Zugankers angeordnet ist.

Zum Drehen der Exzenterbüchsen sind diese mit Zahnkränzen versehen, die mit senkrechten, in übereinanderliegenden Einbaustücken fluchtend gelagerten oberen und unteren Anstellschnecken im Eingriff sind, die verschiebebeweglich miteinander gekuppelt sind. Hierdurch bleiben die Eingriffsverhältnisse zwischen den Anstellschnecken und den Zahnkränzen der Exzenterbüchsen unbeeinflußt, wenn die Einbaustücke unter dem Einfluß der Krafteinrichtungen der Biegesteuerung für die Messerwellen Kippbewegungen ausführen.

Zweckmäßig sind die Anstellschnecken lediglich auf einer Seite der Messerwellen motorisch angetrieben, wobei die untere Anstellschnecke über Kegelräder mit einer Längswelle verbunden ist, die mit der unteren Anstellschnecke auf der anderen Seite der Messerwellen über Kegelräder verbunden ist. Hierdurch wird ein Synchronlauf der beiderseitigen Anstellvorrichtungen sichergestellt, und zwar mit nur einem Anstellmotor, der zweckmäßig ein Getriebemotor ist.

Wenn die übereinanderliegenden Einbaustücke der Bedienungsseite einschließlich der Lager wie bekannt horizontal soweit verschiebbar sind, daß die Zapfen der Messerwellen für die Montage der Kreismesser frei sind, ist der motorische Antrieb auf der Antriebsseite der Messerwellen anzuordnen, wobei die Längswelle am bedienungsseitigen Ende eine Vielnutverzahnung aufweist, die mit einer Kuppelbüchse im unteren Einbaustück durch die Verschiebebewegungen der Einbaustücke ein- und auskuppelbar ist. Hierdurch wird erreicht, daß die bedienungsseitigen Einbaustücke wegen ihrer Verschieblichkeit zum Freimachen der Messerwellenzapfen keinen eigenen Anstellmotor benötigen. Unter diesem Aspekt liegt es im Rahmen der Erfindung, daß die Einbaustücke der Bedienungsseite auf einer schwenkbaren Plattform verschieblich geführt sind, deren Tragfläche in der ersten Schwenklage mit einer ortsfesten Tragfläche des Grundrahmens der Streifenschere fluchtet und die sich in der zweiten, um 90° abgeschwenkten Schwenklage außerhalb der senkrechten Mittenebene der Messerwellen erstreckt. Indem die bedienungsseitigen Einbaustücke auf diese Weise beiseite geschwenkt werden können, ergibt sich mehr Platz für die mit dem Messerwechsel und der axialen Einstellung der Kreismesser befaßten Bedienungsleute.

Statt einer willkürlichen Steuerung der Biegezylinder ist es vorteilhaft, die Durchbiegung einer Messerwelle durch einen Weggeber zu erfassen und über eine Regeleinrichtung die Durchbiegung der Messerwellen geregelt zu kompensieren.

In der Zeichnung sind Ausführungsbeispiele einer LängsteilStreifenschere gemäß der Erfindung dargestellt, und zwar zeigen:

Fig. 1 eine schaubildliche Darstellung der Schere einschließlich Antrieb,

Fig. 2 einen vertikalen Schnitt durch die Mittenachsen der Messerwellen zur Darstellung deren Lagerungen in übereinanderliegenden Einbaustücken,

Fig. 3 einen Vertikalschnitt durch die Einbaustücke in den Vertikalebenen der sie verbindenden Zuganker, und

Fig. 4 eine andere Ausführungsform einer Schere in Seitenansicht der antriebsseitigen Einbaustücke in der Bauart einer Wechselschere zum Abziehen der Einbaustücke auf einem separaten Messerbauplatz.

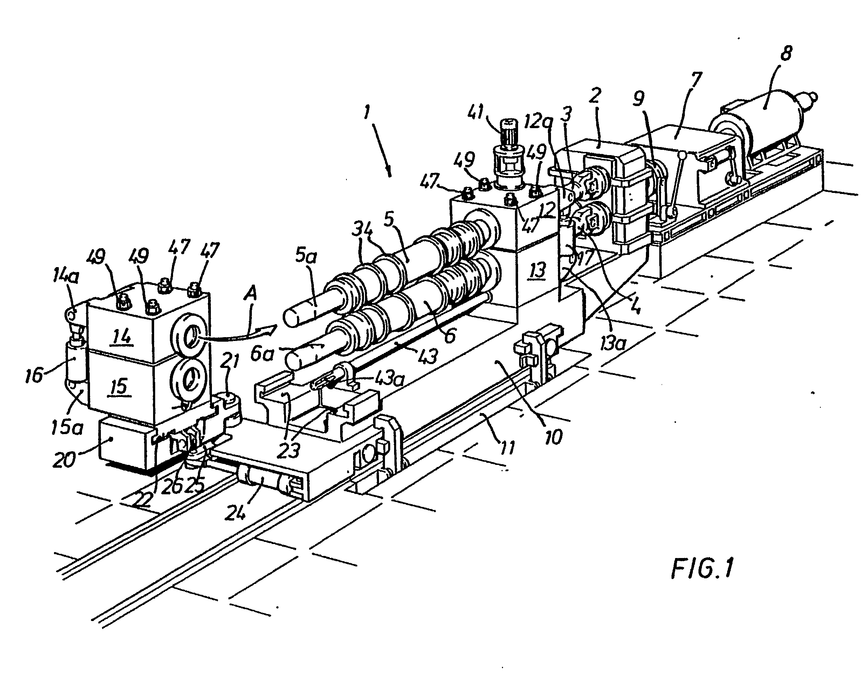

Die in Fig. 1 dargestellte Längsteil-Streifenschere 1 umfaßt ein Kammwalzengetriebe 2, von dem aus über Gelenkspindeln 3, 4 die Messerwellen 5, 6 angetrieben werden. Dem Kammwalzengetriebe 2 vorgeordnet ist ein feststehendes Getriebe 7 sowie ein Elektromotor 8. Zwischen dem Kammwalzengetriebe 2 und dem feststehenden Getriebe 7 ist eine handbetätigte Kupplung 9 vorgesehen.

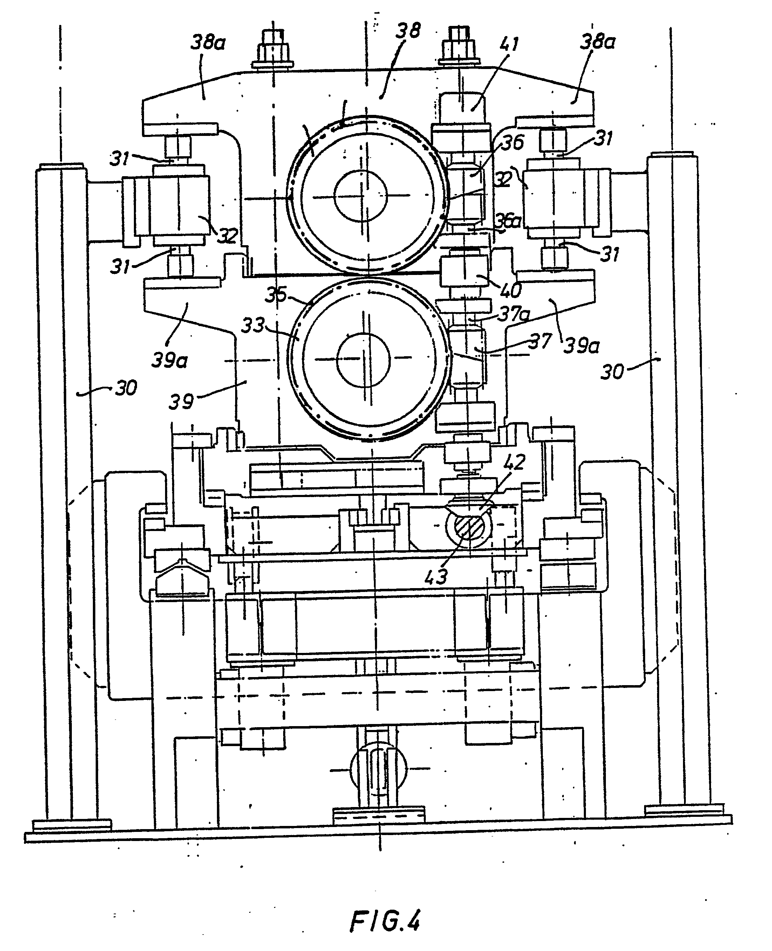

Zur Streifenschere 1 gehört ein Maschinenbett 10, das in bekannter Weise auf einem Grundrahmen 11 festgeklemmt werden kann. Die Messerwellen 5, 6 sind auf der Antriebsseite in übereinanderliegenden Einbaustücken 12, 13 gelagert, die bedienungsseitigen Einbaustücke 14, 15, die von den Messerwellenzapfen 5a, 6a abgezogen und abgeschwenkt dargestellt sind, weisen Paare von Hebelarmen 12a, 13a bzw. 14a, 15a auf, zwischen denen Paare von hydraulischen Biegezylindern 16, 17 angeordnet sind, die über zylinderseitige und kolbenseitige Gelenkbolzen an die Hebelarme angeschlossen sind. Wie Fig. 4 zeigt, können Biegezylinder 32 auch zwischen Hebelarmen 38a und 39a übereinanderliegender Einbaustücke 38, 39 an ortsfesten Stützen 30 festgelegt sein. Sie sind dann mit zwei entgegengesetzt aus- und einfahrbaren Kolbenstangen 31 versehen.

Die bedienungsseitigen Einbaustücke 14, 15 sind nach Fig. 1 auf einer schwenkbaren Plattform 20 verschieblich geführt, die um eine Schwenkachse 21 des Maschinenbettes 10 schwenkbar ist. Das untere Einbaustück 15 ruht auf einer unterbrochenen Tragfläche 22, die mit der unterbrochenen Tragfläche 23 des Maschinenbettes 10 fluchtet, wenn die schwenkbare Plattform in Pfeilrichtung A um 90° beigeschwenkt ist. Zum Schwenken dient ein hydraulischer Zylinder 24, der an einem Schwenkhebel 25 der Schwenkachse 21 angreift. Die Schwenkachse 21 liegt derart seitlich gegenüber der senkrechten Mittenebene der Messerwellen 5, 6, daß sich die schwenkbare Plattform 20 in der dargestellten abgeschwenkten Schwenklage außerhalb der senkrechten Mittenebene der Messerwellen erstreckt.

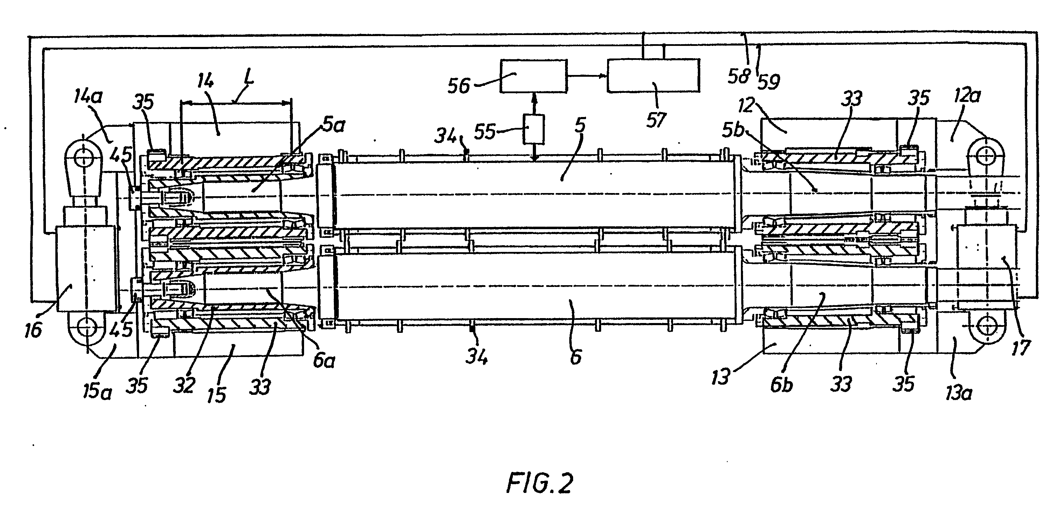

Fig. 2 verdeutlicht die Lagerung der Messerwellen 5, 6 über ihre Zapfen 5a, 6a bzw. 5b, 6b in Wälzlagern, die zur Übertragung der von den Biegezylindern 16, 17 ausgeübten Biegemomente auf die Messerwellen eine definierte Lagerlänge L begründen, so daß die Messerwellenzapfen in ihren Einbaustücken fest eingespannt sind. Während die Innenringe der nicht näher bezeichneten Wälzlager innerhalb der antriebsseitigen Einbaustücke 12, 13 auf den Messerwellenzapfen 5b, 6b unmittelbar aufgezogen sind, sind auf der Bedienungsseite Innenhülsen 32 vorgesehen, die mit äußeren Exzenterbüchsen 33 eine Baueinheit bilden, die von den bedienungsseitigen Messerwellenzapfen 5a, 6a durch Verschiebebewegung der Einbaustücke 14, 15 abgezogen werden können. Der Übersicht halber sind in Fig. 2 die Innenhülsen 32 und die Exzenterbüchsen 33 lediglich im Zusammenhang mit dem Messerwellenzapfen 6a bezeichnet worden. Es versteht sich, daß auf der Antriebsseite die Außenringe der Wälzlager ebenfalls in Exzenterbüchsen 33 aufgezogen sind, da die Messerwellen 5, 6 im Ausführungsbeispiel über in den Einbaustücken drehbare Exzenterbüchsen anstellbar sind, wie nachstehend erläutert wird.

Zur Anstellung der Messerwellen 5, 6 und damit zur Einstellung der Messerüberdeckung der Kreismesser 34 sind die Exzenterbüchsen 33 mit Zahnkränzen 35 versehen, die paarweise miteinander im Eingriff sind. Wie das hinsichtlich der Gestaltung der Einbaustücke abweichende Ausführungsbeispiel nach Fig. 4 zeigt, sind die Zahnkränze 35 mit senkrechten, in übereinanderliegenden Einbaustücken 38, 39 fluchtend gelagerten oberen und unteren Anstellschnecken 36, 37 im Eingriff. Die Schneckenwellen 36a, 37a von übereinanderliegenden Einbaustücken 38, 39 sind über Kuppelhülsen 40 verschiebebeweglich miteinander gekuppelt, da übereinanderliegende Einbaustücke unter dem Einfluß der Biegezylinder Kippbewegungen ausführen.

Übereinstimmend gilt für alle Ausführungsbeispiele, daß die Anstellschnecken 36, 37 auf einer Seite der Messerwellen motorisch angetrieben sind, wie der einzige Getriebemotor 41 in Fig. 1 und 4 zeigt.

Um auch die Exzenterbüchsen 33 innerhalb der bedienungsseitigen Einbaustücke 14, 15 von dem einzigen, auf der Antriebsseite angeordneten Getriebe-Anstellmotor 41 zu betätigen, ist die untere Anstellschnecke 37 nach Fig. 4 über Kegelräder 42 mit einer Längswelle 43 verbunden, die sich parallel zu den Messerwellen 5, 6 erstreckt, wie Fig. 1 zeigt. Am freien Ende trägt diese Längswelle eine Vielnutverzahnung 43a, die in eine Kuppelbüchse 44 im unteren Einbaustück 15 eintritt, wenn die schwenkbare Plattform 20 in Pfeilrichtung A verschwenkt ist und die Einbaustücke 14, 15 auf die ortsfesten Tragflächen 23 übergeschoben sind, wobei auch die Messerwellenzapfen 5a, 6a in die Innenbüchse 32 (Fig. 2) eintreten. Wie Fig. 2 weiter zeigt, werden dann die Messerwellenzapfen 5a, 6a durch stirnseitige Schrauben 45 in den Innenbüchsen 32 verspannt. Die Kuppelbüchse 44 ist, wie die Längswelle 43 in Fig. 4, ebenfalls über Kegelräder mit den nicht dargestellten fluchtenden Antriebsschnecken innerhalb der bedienungsseitigen Einbaustücke 14, 15 verbunden, so daß von dem einzigen Anstell-Getriebemotor 41 der Antriebsseite ausgehend die Anstellung der Messerwellen 5, 6 synchron auf beiden Seiten der Messerwellen erfolgt, wenn die Längswelle 43 durch die Verschiebebewegungen der Einbaustücke 14, 15 mit der Kuppelbüchse 44 eingekuppelt ist.

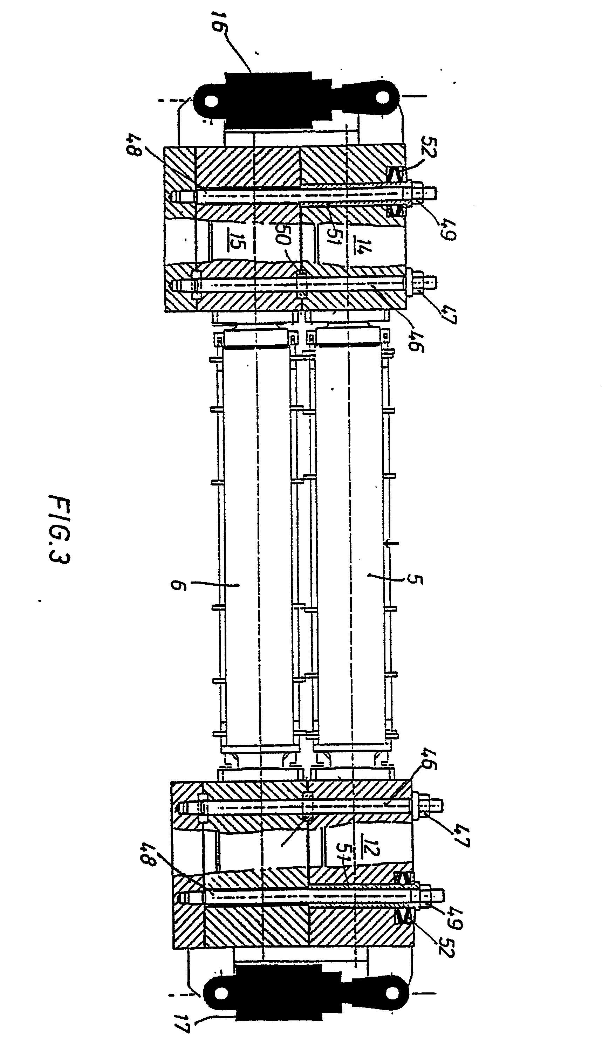

Anhand von Fig. 3 wird nunmehr erläutert, in welcher Weise übereinanderliegende Einbaustücke zur Übertragung von positieven Biegemomenten zugfest miteinander verbunden sind, um Kippbewegungen ausführen zu können. Biegemomente sind positiv, wenn die Messerwellen 5, 6 unter einer Spreizkraft der Biegezylinder 16, 17 nach innen, d. h. entgegen der betriebsbedingten Durchbiegung nach außen, gebogen werden. Die zugfeste Verbindung übereinanderleigender Einbaustücke 12, 13 bzw. 14, 15 besteht jeweils aus zwei Paaren von Zugankern 46 mit Spannmuttern 47 sowie vorgespannten Zugankern 48 mit Spannmuttern 49, deren Anordnung sich aus der aus Fig. 1 ersichtlichen Lage der Spannmuttern ergibt. Die in größter Entfernung von den zugeordneten Krafteinrichtungen bzw. Biegezylindern 16, 17 angeordneten Zuganker 46 durchgreifen ein zwischen übereinanderliegenden Einbaustücken angeordnetes Distanzstück 50, das durch ballige Formgebung gelenkartig Kippbewegungen der Einbaustücke unter der Spreizkraft der Biegezylinder 16, 17 zuläßt. Die in kürzester Entfernung von den zugeordneten Biegezylindern angeordneten Zuganker 48 sind über die Spannmuttern 49, deren Spannkraft über Druckhülsen 51 unmittelbar in die unteren Einbaustücke 13 bzw. 15 eingeleitet ist, vorspannbar, jedoch durchgreifen die Zuganker am oberen Ende eine Druckfeder 52, die zwischen den oberen Einbaustükken 12 bzw. 14 und der Spannmutter 49 eines jeden Zugankers 48 angeordnet ist.

Die Wirkungsweise der in Fig. 1 dargestellten Längsteil-Streifenschere 1 ist folgende:

In der abgeschwenkten Lage der bedienungsseitigen Einbaustükke 14, 15 nach Fig. 1 ist für Bedienungsleute ausreichend Platz vorhanden, um durch Abziehen von Kreismessern 34 und Auswechseln der zwischen den Kreismessern liegenden Distanzhülsen die gewünschten Streifenbreiten einzustellen. Sind auf diese Weise die Messerwellen für ein neues Schneidprogramm vorbereitet, wird der hydraulische Zylinder 24 betätigt, um die schwenkbare Plattform 20 mit den darauf ruhenden bedienungsseitigen Einbaustücken 14, 15 in Pfeilrichtung A beizu schwenken. Anschließend wird ein nicht erkennbarer hydraulischer Zylinder innerhalb der schwenkbaren Plattform 20 betätigt, der über seinen Anschluß 26 die Einbaustücke 14, 15 von den Tragflächen 22 auf die fluchtenden ortsfesten Tragflächen 23 des Maschinenbettes 10 überschiebt. Hierbei treten die Messerwellenzapfen 5a, 6a sowie die Vielnutverzahnung 43a der Längswelle 43 in die Innenbüchsen 32 (Fig. 2) der Lagerungen bzw. in die Kuppelbüchse 44 ein. Daraufhin werden die Muttern 45 eingesetzt, um die Messerwellenzapfen 5a, 6a in die mit konischen Innenflächen versehenen Innenbüchsen 32 einzuziehen und zu verspannen.

Nachdem die Messer auf Streifenbreite eingestellt sind, ist die Messerüberdeckung durch Betätigen der Anstellvorrichtungen einzustellen. Hierzu wird der einzige Getriebe-Anstellmotor 41 in der einen oder anderen Richtung betätigt, wodurch alle Anstellschnecken 36, 37 der Antriebsseite sowie - über die Längswelle 43 - auch die entsprechenden Anstellschnecken der Bedienungsseite gedreht werden. Hierdurch werden auch die Exzenterbüchsen 33 gedreht, in denen die Messerwellenzapfen exzentrisch gelagert sind, wie Fig. 4 zeigt. Um die sich verstellenden Messerwellen stets in senkrechter Mittenebene zu halten, haben die Anstellschnecken 36, 37 gegenläufiges Gewinde, so daß sich auch die Exzenterbüchsen 33 gegenläufig drehen.

Vor oder während des Betriebes werden die Biegezylinder 16, 17 in dem Sinne mit Druck beaufschlagt, daß sie eine Spreizkraft ausüben. Über die feste Einspannung der Messerwellenzapfen innerhalb der Einbaustücke über eine ausreichend bemessene definierte Lagerlänge L werden auf die Messerwellen 5, 6 positive Biegemomente ausgeübt, die die Messerüberdeckung während des Schneidens insbesondere der in dem mittleren Bereich der Messerwelle befindlichen Kreismesser konstant halten. Wie Fig. 2 zeigt, kann die Durchbiegung der oberen Messerwelle 5 durch einen Weggeber 55 abgetastet werden, dessen Signale einer Regeleinrichtung 56 zugeführt werden, von der aus ein Servoventil 57 gesteuert wird. Vom Servoventil 57 gehen die Leitungen 58, 59 zu den Biegezylindern 16, 17, so daß die betriebsbedingten Durchbiegungen der Messerwelle nach außen geregelt kompensiert werden und die voreingestellten Messerüberdeckungen keine Änderungen erfahren.

Hierdurch können unabhängig von den Schneidkräften stets gratfreie Schneidkanten erzeugt werden.

Die sich unter der Spreizkraft der Biegezylinder 16, 17 einstellenden Kippbewegungen der übereinanderliegenden Einbaustücke sind trotz der zugfesten Verbindung dieser Einbaustücke über die Zugankerpaare 46 und 48 möglich, da die Distanzstücke 50 quasi die Kippachsen darstellen und ein Abheben der Einbaustücke im Bereich der vorgespannten Zuganker 48 durch die Druckfedern 52 ermöglicht wird.

## Patentansprüche

1. Längsteil-Streifenschere für Bleche und Bänder aus Metall, deren die Kreismesser tragenden Messerwellen (5, 6) zur Einstellung der Messerüberdeckungen anstellbar sind, wogegen die Messerspalte durch zwischen den Kreismessern angeordnete Distanzhülsen einstellbar sind, **gekennzeichnet durch** die Anwendung einer Biegesteuerung für die Messerwellen (5, 6) zur Konstanthaltung eingestellter Messerüberdeckungen und Messerspalte.

2. Längsteil-Streifenschere nach Anspruch 1, gekennzeichnet durch unmittelbar an den Zapfen (5a, 6a; 5b, 6b) der Messerwellen (5, 6) angreifende Krafteinrichtungen (16, 17) zur Biegesteuerung der Messerwellen.

3. Längsteil-Streifenschere nach Anspruch 1, gekennzeichnet durch über Hebelarme (12a, 13a; 14a, 15a) an übereinanderliegenden Einbaustücken (12, 13; 14, 15) der Messerwellen (5, 6) angreifende Krafteinrichtungen (16, 17), wobei die Messerwellenzapfen (5a, 6a; 5b, 6b) in den Einbaustücken zur Übertragung von Biegemomenten auf die Messerwellen über eine definierte Lagerlänge (L) fest eingespannt sind.

4. Längsteil-Streifenschere nach Anspruch 2 oder 3, dadurch gekennzeichnet, daß die Krafteinrichtungen aus doppelt beaufschlagbaren hydraulischen Biegezylindern (16, 17) bestehen.

5. Längsteil-Streifenschere nach Anspruch 3 und 4, dadurch gekennzeichnet, daß die Biegezylinder (16, 17) über zylinderseitige und kolbenstangenseitige Gelenkbolzen an die Hebelarme (12a, 13a; 14a, 15a) übereinanderliegender Einbaustücke (12, 13; 14, 15) angeschlossen sind.

6. Längsteil-Streifenschere nach Anspruch 3 und 4, dadurch gekennzeichnet, daß die Biegezylinder zwischen Hebelarmen (38a, 39a) übereinanderliegender Einbaustükke (38, 39) festgelegt und mit zwei entgegengesetzt aus- und einfahrbaren Kolbenstangen (31) versehen sind (Fig. 4).

7. Längsteil-Streifenschere nach Anspruch 2 oder 3, dadurch gekennzeichnet, daß die Messerwellen (5, 6) durch zwei senkrechte Verstellspindeln mit gegenläufigen Gewinden anstellbar sind, deren Muttergewinde in übereinanderliegenden Einbaustücken in möglichst großer Entfernung von den zugeordneten Krafteinrichtungen angeordnet sind.

8. Längsteil-Streifenschere nach Anspruch 2 oder 3, dadurch gekennzeichnet, daß die Messerwellen (5, 6) über in den Einbaustücken drehbare Exzenterbüchsen (33) anstellbar sind, und daß übereinanderliegende Einbaustücke (12, 13; 14, 15) in der Weise zur Übertragung von positiven oder negativen Biegemomenten zug- oder druckfest miteinander verbunden sind, daß sie Kippbewegungen ausführen können.

9. Längsteil-Streifenschere nach Anspruch 8, dadurch gekennzeichnet, daß übereinanderliegende Einbaustükke (12, 13; 14, 15) durch zwei Paare von Zugankern (46,48) zugfest miteinander verbunden sind, daß im Bereich der in größter Entfernung von den zugeordneten Krafteinrichtungen (16, 17) angeordneten Zugankern (46) zwischen den Einbaustücken mindestens ein die Kippbewegungen zulassendes Distanzstück (50) vorgesehen ist, und daß die in kürzester Entfernung von den zugeordneten Krafteinrichtungen angeordneten Zuganker (48) an einem Ende eine Druckfeder (52) durchgreifen, die zwischen einem der Einbaustükke (12, 14) und der Spannmutter (49) eines jeden Zugankers angeordnet ist.

10. Längsteil-Streifenschere nach Anspruch 8, dadurch gekennzeichnet, daß die Exzenterbüchse (33) mit Zahnkränzen (35) versehen sind, die mit senkrechten, in übereinanderliegenden Einbaustücken (38, 39) fluchtend gelagerten oberen und unteren Anstellschnecken (36 , 37) im Eingriff sind, und daß die Anstellschnecken von übereinanderliegenden Einbaustücken verschiebebeweglich miteinander gekuppelt sind (40).

11. Längsteil-Streifenschere nach Anspruch 10, dadurch gekennzeichnet, daß die Anstellschnecken (36, 37) auf einer Seite der Messerwellen (5, 6) motorisch angetrieben sind, und daß die untere Anstellschnecke (37) über Kegelräder (42) mit einer Längswelle (43) verbunden ist, die mit der unteren Anstellschnecke auf der anderen Seite der Messerwellen über Kegelräder verbunden ist.

12. Längsteil-Streifenschere nach Anspruch 11, bei der die übereinanderliegenden Einbaustücke der Bedienungsseite einschließlich der Lager horizontal soweit verschiebbar sind, daß die Zapfen der Messerwellen frei sind, dadurch gekennzeichnet, daß der motorische Antrieb (41) auf der Antriebsseite der Messerwellen (5, 6) angeordnet ist und daß die Längswelle (43) am bedienungsseitigen Ende eine Vielnutverzahnung (43a) aufweist, die mit einer Kuppelbüchse (44) im unteren Einbaustück (15) durch die Verschiebebewegung der Einbaustücke ein- und auskuppelbar ist.

13. Längsteil-Streifenschere nach Anspruch 12, dadurch gekennzeichnet, daß die Einbaustücke (14, 15) der Bedienungsseite auf einer schwenkbaren Plattform (20) verschieblich geführt sind, deren Tragfläche (22) in der ersten Schwenklage mit einer ortsfesten Tragfläche (23) des Maschinenrahmens (10) der Streifenschere (1) fluchtet und die sich in der zweiten, um 90° abgeschwenkten Schwenklage außerhalb der senkrechten Mittenebene der Messerwellen erstreckt.

14. Längsteil-Streifenschere nach einem der Ansprüche 1 bis 6, gekennzeichnet durch einen Weggeber (55) zur Erfassung der Durchbiegung einer Messerwelle (5) sowie eine Regeleinrichtung (56) zur geregelten Kompensation der Durchbiegung der Messerwellen (5, 6).

## Claims

1. Longitudinal parting strip shears for plates or bands of metal, the blade shafts (5, 6) of which shears carry the circular blades and are adjustable for the setting of the blade overlaps, whereagainst the blade gaps are adjustable by spacer sleeves arranged between the circular blades, characterised by the use of a bending control for the blade shafts (5, 6) for maintaining set blade overlaps and blade gaps constant.

2. Longitudinal parting strip shears according to claim 1, characterised by force equipments (16, 17) engaging directly at the spigots (5a, 6a; 5b, 6b) of the blade shafts (5, 6) for the bending control of the blade shafts.

3. Longitudinal parting strip shears according to claim 1, characterised by force equipments (16, 17) engaging by way of lever arms (12a, 13a; 14a, 15a) at chocks (12, 13; 14, 15), which lie one above the other, of the blade shafts (5, 6), wherein the blade shaft spigots (5a, 6a; 5b, 6b) are firmly clamped over a defined bearing length (L) in the chocks for the transmission of bending moments onto the blade shafts.

4. Longitudinal parting strip shears according to claim 2 or 3, characterised thereby, that the force equipments consist of doubleacting hydraulic bending cylinders (16, 17).

5. Longitudinal parting strip shears according to claim 3 and 4, characterised thereby, that the bending cylinders (16, 17) are connected by way of hinge pins at the cylinder and at the piston rod to the lever arms (12a, 13a; 14a, 15a) of chocks (12, 13; 14, 15).

6. Longitudinal parting strip shears according to claim 3 and 4, characterised thereby, that the bending cylinders are fixed between lever arms (38a, 38a) of chocks (38, 39) lying one above the other and provided with two piston rods (31) movable out and in oppositely (Fig. 4).

7. Longitudinal parting strip shears according to claim 2 or 3, characterised thereby, that the blade shafts (5, 6) are screwable down by two vertical adjusting spindles with threads of opposite sense, the nut threads of which are arranged in chocks lying one above the other at the greatest possible distance from the associated force equipments.

8. Longitudinal parting shears according to claim 2 or 3, characterised thereby, that the blade shafts (5, 6) are screwable down by way of eccentric bushings (33), which are rotatable in the chocks, and that chocks (12, 13; 14, 15), which lie one above the other, are connected one with the other to be resistant to tension or pressure in such a manner for the transmission of positive or negative bending moments that they can perform tilting movements.

9. Longitudinal parting strip shears according to claim 8, characterised thereby, that chocks (12, 13; 14, 15), which lie one above the other, are connected one with the other to be resistant to tension by two pairs of tie rods (46, 48), that at least one spacer member (50) permitting the tilting movements is provided between the chocks in the region of the tie rods (46) arranged at the greatest possible distance from the associated force equipments (16, 17) and that the tie rods (48), which are arranged at the shortest distance from the associated force equipments, at one end engage through a compression spring (52), which is arranged between one of the chocks (12, 14) and the tightening nut (49) of each tie rod.

10. Longitudinal parting strip shears according to claim 8, characterised thereby, that the eccentric bushings (33) are provided with toothed rims (35), which are in engagement with upper and lower screw-down worms (36, 37) borne in alignment in chocks (38, 39) lying one above the other and that the screw-down worms of chocks lying one above the other are coupled (40) one with the other to be displaceably movable.

11. Longitudinal parting strip shears according to claim 10, characterised thereby, that the screw-down worms (36, 37) on one side of the blade shafts (5; 6) are motor-driven and that the lower screw-down worm (37) is connected by way of bevel wheels (42) with a longitudinal shaft (43), which is connected by way of bevel wheels with the lower screw-down worm on the other side of the blade shafts.

12. Longitudinal parting strip shears according to claim 11, in which the chocks lying one above the other at the operating side inclusive of the bearings are horizontally displaceable so far that the spigots of the blade shafts are free, characterised thereby, that the motor drive (41) is arranged on the drive side of the blade shafts (5, 6) and that the longitudinal shaft (43) at the operating side end displays a multi-start toothing (43a), which is couplable with and uncouplable from a coupling bush (44) in the lower chock (15) by the displacing movement of the chocks.

13. Longitudinal parting strip shears according to claim 12, characterised thereby, that the chocks (14, 15) of the operating side are displaceably guided on a pivotable platform (20), the carrying surface (22) of which in the first pivotal setting is in alignment with a fixedly located carrying surface (23) of the machine frame (10) of the strip shears (1) and in the second pivotal setting, pivoted away through 90°, extends outside the vertical central plane of the blade shafts.

14. Longitudinal parting strip shears according to one of the claims 1 to 6, characterised by a travel transmitter (55) for the detection of the bowing of a blade shaft (5) as well as a regulating equipment (56) for the regulated compensation of the bowing of the blade shafts (5, 6).

## Revendications

1. Cisaille à refendre des bandes de tôle ou des feuillards métalliques, dont les arbres porte-lames (5, 6) munis de lames circulaires sont réglables en vus du réglage des recouvrements des lames, tandis que les écarts entre lames sont réglables par des douilles d'entretoisement agencées entre les lames circulaires, caractérisée par l'utilisation d'une commande en flexion des arbres porte-lames (5, 6) en vus de maintenir constants les recouvrements de lames et écarts entre lames réglés.

2. Cisaille à refendre selon la revendication 1 caractérisée par des organes de transmission de force (16, 17) agissant directement sur les tourillons (5a, 6a; 5b, 6b) des arbres porte-lames pour la commande en flexion des arbres porte-lames.

3. Cisaille à refendre selon la revendication 1 caractérisée par des organes de transmission de force (16, 17) agissant via des bras de levier (12a, 13a; 14a, 15a) sur les empoises superposées (12, 13; 14, 15) des arbres porte-lames (5, 6), les tourillons des arbres porte-lames (5a, 6a; 5b, 6b) étant enserrés rigidement sur une longueur déterminée (L) dans les empoises, en vue de la transmission de moments de flexion.

4. Cisaille à refondre selon la revendication 2 ou 3, caractérisée en ce que les organes de transmission de force consistent en des vérins hydrauliques de flexion (16, 17) à action double.

5. Cisaille à refendre selon les revendications 3 et 4 caractérisée en ce que les vérins de flexion (16, 17) sont reliés aux bras de levier (12a, 13a; 14a, 15a) des empoises superposées (12, 13; 14, 15) par l'intermédiaire d'axes d'articulation disposés du côté du cylindre et du côté de la tige de piston.

6. Cisaille à refendre selon les revendications 3 et 4 caractérisée en ce que les vérins de flexion (16, 17) sont fixés entre les bras de levier (38a, 39a) d'empoises superposées (38, 39) et sont équipés de deux tiges de piston (31) extensibles et rétractables dans des sens opposés (figure 4).

7. Cisaille à refendre selon la revendication 2 ou 3 caractérisée en ce que les arbres porte-lames (5, 6) sont réglables par deux broches de commande verticales à pas inversés, dont les filets femelles sont agencés dans les empoises superposées à une distance des organes de transmission de force associés la plus grande possible.

8. Cisaille à refendre selon la revendication 2 ou 3 caractérisée en ce que les arbres porte-lames (5, 6) sont réglables par des douilles excentriques (33) logées de manière à pouvoir tourner dans les empoises en ce que les empoises superposées ( 12, 13; 14, 15) sont reliées entre elles pour la transmission de moments de flexion positifs ou négatifs de manière à résister aux efforts de traction et de compression de telle sorte qu'elles peuvent effectuer des mouvements de basculement.

9. Cisaille à refondre selon la revendication 8 caractérisée en ce que les empoises superposées (12, 13; 14, 15) sont reliées entre elles par deux paires de tirants d'ancrage (46, 48), en ce qu'au moins une pièce d'entretoisement (50) autorisant les mouvements de basculement est prévue entre les empoises dans la zone des tirants d'ancrage (46) agencés à la plus grand distance des organes de transmission de force (16, 17) associés, et en ce que les tirants d'ancrage (48) agencés à la plus petite distance des organes de transmission de force associés traversent à une extrémité, un ressort de pression (52) qui est disposé entre l'une des empoises (12, 14) et l'écrou de serrage (49) de chaque tirant d'ancrage.

10. Cisaille à refendre selon la revendication 8, caractérisés en ce que les douilles excentriques (33) sont munies de dentures extérieures (35) qui sont en interaction avec des vis mères verticales supérieures et inférieures (36, 37) logées en alignement dans les empoises superposées (38, 39), et en ce que les vis mères des empoises superposées sont reliées l'une à l'autre par un accouplement (40) qui permet des déplacements.

11. Cisaille à refendre selon la revendication 10, caractérisée en ce que les vis mères (36, 37) sont entraînées par moteur sur un côté des arbres porte-lames (5, 6) et en ce que la vis mère inférieurs (37) est reliée via des roues coniques (42) à un arbre longitudinal (43) qui est relié à la vis mère inférieure de l'autre côté des arbres porte-lames via des roues coniques.

12. Cisaille à refendre selon la revendication 11 dans laquelle des empoises superposées du côté commande, y compris les paliers, sont déplaçables horizontalement à tel point que les tourillons des arbres porte-lames sont libres, caractérisée en ce que l'entraînement par moteur (41) est agencé du côté entraînement des arbres porte-lames (5, 6) et en ce que l'arbre longitudinal (43) comporte à l'extrémité du côté commande, des cannelures (43a) qui sont accouplables à un manchon d'accouplement (44) de l'empoise inférieure (15) ou désaccouplables de celui-ci, par le déplacement des empoises.

13. Cisaille à refendre selon la revendication 12 caractérisée en ce que les empoises (14, 15) du côté commande sont guidées en déplacement sur une plate-forme pivotable (20) dont la surface de support (22) est, dans la première position de pivotement, dans l'alignement avec une surface d'appui fixe (23) du bâti de machine (10) de la cisaille à refendre (1) et s'étend, dans la seconde position de pivotement décalée de 90°, en dehors du plan médian vertical des arbres porte-lames.

14. Cisaille à refendre selon l'une quelconque des revendications 1 à 6 caractérisée par un capteur de déplacement (55) destiné à mesurer la flexion d'un arbre porte-lame (5) ainsi que par un dispositif de régulation (56) pour la compensation régulée de la flexion des arbres porte-lame (5, 6).

FIG.1

EP 0 287 848 B1

FIG.2

EP 0 287 848 B1

FIG.3

FIG.4